# EUROPEAN PATENT APPLICATION

(11) **EP 4 582 395 A1**
(43) Date of publication of application: **09.07.2025**
(21) Application number: 24223343.5
(22) Date of filing: 27.12.2024
(51) Int. Cl.: C03C 17/32, C03C 17/28, B05D 1/02, B05D 3/02, C03C 17/00

(54) **METHOD FOR DECORATING A GLASS CONTAINER WITH VARNISH**

(30) Priority: 27.12.2023 BE 202306068
(71) Applicant: Baobab Collection SA, 1300 Wavre (BE)
(72) Inventor: LAHY, Alain, 1300 Wavre (BE); AUGUSTO, Arnaud, 1300 Wavre (BE); DELEVAL, Eléonore, 1300 Wavre (BE); GARDIES, Jonathan, 1300 Wavre (BE)
(74) Representative: Brantsandpatents bv

(57) **Abstract**

The current invention relates to a method for decorating a glass container with varnish, comprising the steps of: (i) spraying varnish on a glass container, (ii) drying said glass container for at least 4 hours, (iii) transferring said glass container to an oven, wherein said glass container is subjected to a thermal treatment, (iv) removing said glass container from said oven.

## Description

### FIELD OF THE INVENTION

The present invention relates to a method for decorating a glass container with varnish and decorated glass container.

### BACKGROUND

In the field of decorative glassware, particularly in the context of varnish application for glass containers, existing methods present several limitations and challenges. Traditional methods of applying varnish to glass containers often result in inconsistent coating thickness, leading to variations in durability and aesthetic appeal. The uneven application can cause drips or pooling of the varnish, detracting from the visual quality of the product and potentially compromising the integrity of the design over time. Moreover, these methods typically require extensive manual labor and precision, which can be time-consuming and lead to higher production costs. The inability to uniformly apply varnish not only affects the appearance but may also lead to inefficiencies in the use of materials, as excess varnish is often wasted or requires additional steps to remove.

Furthermore, the drying and curing processes in conventional varnish decoration techniques are often inefficient and can be detrimental to the overall quality of the finished product. Standard drying methods may take considerable time, slowing down production and leading to potential bottlenecks in manufacturing. In addition, without proper control over the drying and curing environment, there is a risk of dust or other particles adhering to the wet varnish, again affecting the aesthetic and functional quality of the container. The lack of a standardized or controlled thermal treatment process can lead to inconsistent results, with some areas of the varnish not adequately cured, resulting in a less durable finish that may chip or degrade over time.

ITMI20130011, US2017166735, US3937853, US2009104387, GB1515541, WO2017Y178584 disclose decorating methods.

The industry thus faces a significant need for an improved method of decorating glass containers with varnish that addresses these limitations. An ideal method would provide a consistent and uniform application of varnish, reduce waste, improve the efficiency and speed of the drying and curing process, and ultimately result in a higher quality, more durable, and aesthetically pleasing product. By introducing a method that can reliably produce superior decorative finishes, manufacturers can not only enhance the appeal and longevity of their products but also achieve greater efficiency and cost-effectiveness in their production processes.

### SUMMARY OF THE INVENTION

The invention provides an improved method for decorating glass containers with varnish according to claim 1. The method involves spraying varnish on the glass container. The glass container is then subjected to a controlled thermal treatment in an oven, with specific temperature increase rates and durations at end temperature.

The invention optimizes the application of varnish, ensuring uniformity and efficient use of materials. It also improves the durability and aesthetic quality of the decorated glass containers, enhances production efficiency, and allows for better quality control. The method is particularly beneficial for bulk production of decorative glassware, enhancing brand reputation and market competitiveness.

The described method offers several advantages. The gradual escalation of the thermal treatment ensures a better quality of finish. The method promotes a more complete varnish curing and a glossier end product, leading to a superior aesthetic quality of the decorated glass container. Moreover, the method enhances the appeal and longevity of the products, and also achieves greater efficiency and cost-effectiveness in the production processes. These advantages make the method a significant improvement over traditional methods of decorating glass containers with varnish.

Further, the method of applying varnish in multiple layers, and preferably two layers, offers significant improvements in terms of the aesthetic appeal, durability, and longevity of the varnish finish on glass containers. This method represents a significant advancement in the field of decorative glassware and packaging, and has the potential to deliver substantial benefits in terms of product quality, consumer satisfaction, and brand value.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
The term "glass container" refers to any vessel or receptacle made predominantly of glass, intended for holding various substances. This includes jars, bottles, flasks, etc., and can vary in size, shape, and capacity. The material properties of glass, such as transparency, chemical inertness, and aesthetic appeal, make it suitable for a wide range of applications. In a preferred embodiment, the glass container is a candle container.

The expression "varnish" refers to a liquid solution that is applied to surfaces to form a hard, transparent, glossy finish when dried, used for protection and decoration.

The expression "spraying" refers to the action of dispersing a liquid (here, varnish) into fine droplets and applying it over a surface, typically using a spray gun or similar tool.

The expression "drying" refers to the process of removing moisture from something (in this case, the varnish-coated glass container) typically until it reaches a dry state where it is set or hardened.

The term "oven" in this context is a thermal processing unit used for heating, baking, or drying substances or objects. It is capable of reaching and maintaining various set temperatures, and is essential for processes like baking, curing, or other heat treatments.

The expression "thermal treatment" refers to a process involving controlled heating and cooling cycles, used to alter the properties or appearance of materials, particularly for fixing varnish onto glass containers.

The expression "temperature increase rate" refers to the speed at which temperature is raised within the oven, typically measured in degrees Celsius per hour (°C/h).

The expression "end temperature" refers to the final (highest) target temperature achieved in the thermal treatment process, after which the heating is stopped or maintained for a specified period.

The expression "engraving" refers to the process of incising or carving a design onto the surface of an object, such as a glass container, for decorative purposes.

The expression "ambient temperature" refers to the temperature of the surrounding environment where the process is taking place, typically room temperature.

The expression "transferring" refers to the act of moving something from one place to another, here, the process of moving the decorated glass containers into an oven for thermal treatment.

The expression "heating" refers to the process of raising the temperature of an object or substance, in this context, part of the thermal treatment process in the oven.

The expression "cooling" refers to the process of lowering the temperature of an object or substance, in this case, part of the thermal treatment process to finalize the varnish application.

The expression "layer" refers to a single thickness, coating, or stratum of material applied to or over a surface, in this case, a single application of varnish on the glass container.

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a particularly preferred embodiment, the invention relates to a method for decorating a glass container with varnish. The method comprises the steps of spraying varnish on a glass container, drying said glass container for at least 4 hours, and transferring said glass container to an oven. In the oven, the glass container is subjected to a thermal treatment. The thermal treatment involves a process of heating at a temperature increase rate of between 70 and 90°C/h until a temperature of between 90 and 110°C is reached. The method further includes heating at a temperature increase rate of between 145 and 165°C/h until an end temperature is reached. The end temperature lies between 140 and 160°C. The glass container is then heated for a duration ranging from 1 to 20 minutes at said end temperature. Following the heating process, the glass container is cooled by decreasing the temperature in the oven. This leads to obtaining a decorated glass container. The glass container is then removed from the oven.

It is to be understood the steps as disclosed herein are performed sequentially.

The preferred embodiment optimizes the application of varnish on the glass containers by ensuring uniformity. This uniformity reduces the quantity of varnish wasted due to inconsistencies in application, leading to resource efficiency. The embodiment provides a consistent quality in decorating glass containers with varnish, enabling bulk production of uniform products. This enhances brand reputation and increases market competitiveness. The methodical approach of gradually escalating the thermal treatment ensures a better quality of finish. It promotes a more complete varnish curing and a glossier end product, leading to a superior aesthetic quality of the decorated glass container.

In a preferred embodiment of the invention, the varnish is applied to the glass container in multiple layers, preferably two layers. This approach offers several distinct advantages and improvements over conventional single-layer varnish application methods.

Firstly, applying the varnish in multiple layers significantly enhances the aesthetic appeal of the finished product. The additional layers of varnish create a rich, deep finish that is visually striking and adds a sense of luxury and sophistication to the glass container. This can be particularly beneficial in the context of decorative glassware or luxury packaging, where the visual appeal of the product is a key selling point.

Secondly, the use of multiple layers of varnish also increases the durability of the varnish coating. Each layer of varnish serves to reinforce and strengthen the ones beneath it, resulting in a finish that is more resistant to chipping, scratching, and other forms of wear and tear. This in turn leads to products that have a longer lifespan and retain their visual appeal for a longer period of time. This can be particularly beneficial in the context of products that are intended for long-term use or that are exposed to harsh or demanding conditions.

In a more preferred embodiment, the varnish is applied in two layers. This approach strikes a balance between enhancing the aesthetic appeal and durability of the finish, and keeping the varnish application process efficient and cost-effective. Applying too many layers of varnish can be time-consuming and resource-intensive, and may not necessarily result in a proportionate increase in the quality of the finish. By limiting the number of layers to two, the method ensures that the benefits of multiple-layer varnish application are realized, while keeping the process manageable and economical.

In a preferred embodiment of the invention, the method for decorating glass containers involves a drying step carried out between the spraying of varnish layers. In a most preferred embodiment, the first layer of varnish is allowed to dry for at least 30 minutes before the second layer is applied. This allows the first layer to fully adhere to the glass surface and form a solid foundation for the second layer. In a more specific embodiment, the drying time is between 20 and 40 minutes. This range has been found to provide an optimal balance between efficiency and quality, allowing for a quick production process without compromising the durability and quality of the finish. It also provides a sufficient window to prevent contamination, as the varnish is given adequate time to dry before any subsequent steps are carried out. In the most preferred embodiment, the drying time is about 30 minutes.

In this or another embodiment this time period ranges between 1 and 60 minutes, with a more preferred range of between 20 and 40 minutes.

In this preferred embodiment, the drying step not only ensures a more uniform and consistent varnish coating but also contributes to the overall efficiency of the decorating process. By allowing the varnish to dry between layers, the risk of the varnish dripping or pooling is significantly reduced. This, in turn, minimizes the need for additional corrective measures such as wiping off excess varnish, which can be time-consuming and can lead to wastage of materials.

Furthermore, the drying step between spraying layers also enhances the durability of the varnish coating. By ensuring that each layer of varnish is adequately dried before the application of the next layer, the risk of the varnish peeling or chipping off is significantly reduced. This results in a more durable and long-lasting decorative finish that can withstand regular use and handling. By ensuring that the varnish is adequately dried before subsequent steps are carried out, the method reduces the risk of dust or other particles adhering to the wet varnish. This not only improves the aesthetic quality of the product but also its functional quality, as contamination can affect the integrity of the varnish and compromise its protective properties.

In the most preferred embodiment, the varnish is applied in multiple layers, with each layer being allowed to dry before the application of the next. This multilayer approach further enhances the durability and longevity of the finish, as it allows for a more robust varnish coating to be built up on the surface of the glass container. The drying time between layers may vary depending on factors such as the specific varnish formulation and the environmental conditions, but is preferably at least 30 minutes. The final layer of varnish is left to dry for a longer period, preferably at least 6 hours, before the glass container undergoes thermal treatment.

The final layer (this can be the first layer in case only one layer is sprayed) is preferably left to dry for at least 6 hours, ensuring that it is fully cured and hardened before the glass container is subjected to thermal treatment. This sequence of drying and curing steps ensures that each layer of varnish is fully set and bonded to the glass surface, further enhancing the durability and longevity of the finish.

In a more preferred embodiment, the drying time of the glass container in step (ii) is between 4 and 10 hours, more preferably between 5 and 10 hours, and most preferably between 6 and 10 hours. In another or further embodiment, the drying time is at least 4 hours, preferably at least 5 hours, most preferred at least 6 hours.

In a preferred embodiment of the present invention, the method further includes the step of engraving the glass container prior to the application of the thermal treatment. This additional process affords the opportunity to enhance the aesthetic appeal of the decorated glass containers. The engraved designs can provide a unique and customized look to each container, which can be particularly beneficial in industries where product differentiation and brand identity are of high importance. The engraving process can be performed using any suitable engraving device, and the designs can be drawn using a marker or any other suitable implement.

When the glass container is engraved before the thermal treatment, the varnish in the engravings is more securely adhered. This is because the thermal treatment process, which involves heating the glass container at a controlled rate and temperature, effectively 'bakes' the varnish into the engravings. This results in a stronger bond between the varnish and the glass, which significantly enhances the definition and durability of the engraved designs. The thermal treatment process also ensures that the varnish is evenly distributed within the engravings, thereby preventing any inconsistencies or imperfections in the finish.

Moreover, engraving the glass container before the thermal treatment also prolongs the life and aesthetic appeal of the decorated glass container. The enhanced adhesion of the varnish within the engravings ensures that the designs remain clear and intact for a longer period of time, even under conditions of regular use or exposure to environmental factors. The thermal treatment process also enhances the color and gloss of the varnish, which further contributes to the aesthetic appeal of the decorated glass container.

In a preferred embodiment of the invention, the varnish is applied using a spray gun, preferably manually. This embodiment is particularly advantageous as it introduces a level of precision and control that is often lacking in traditional varnish application methods. The manual application of varnish using a spray gun allows for a more uniform and consistent coating to be achieved, which is critical in ensuring the durability and longevity of the finish on the glass container.

The spray gun, in this context, can be any device capable of discharging varnish in a controlled manner to coat the surface of the glass container. The choice of spray gun may be influenced by factors such as the size of the container, the desired thickness of the varnish coating, and the specific varnish formulation being used. The spray gun may be operated by a user who manually controls the discharge of varnish onto the rotating glass container.

In a more preferred embodiment, the speed at which the varnish is sprayed from the gun is controlled to achieve an optimal coating thickness. The speed may be adjusted based on factors such as the size and shape of the glass container, the viscosity of the varnish, and the desired final appearance of the product. It is preferable that the speed is controlled such that a uniform layer of varnish is applied across the entire surface of the glass container, without the occurrence of drips or pooling. This control over the application process results in a more efficient use of varnish, reducing waste and improving the overall cost-effectiveness of the method.

In a preferred embodiment of the method, excessive varnish is removed after the spraying of a layer of varnish. The removal of excessive varnish post application ensures that there is a consistent coating of varnish on the glass containers. This uniformity of the varnish layer enhances the aesthetic appeal of the decorated glass containers, as it eliminates any drips or pooling of varnish that may occur due to uneven application. Furthermore, this consistency of the varnish layer also contributes to the durability of the decoration, as it prevents areas of the container from being exposed to wear and tear due to insufficient varnish coverage.

Furthermore, the removal of excessive varnish after application can improve the drying and curing process of the varnish. By ensuring that there is a uniform and optimal layer of varnish on the glass container, the drying and curing process can be more controlled and efficient. This can potentially reduce the drying and curing time, thereby increasing the overall productivity of the varnish application process. Moreover, an efficient drying and curing process can also enhance the quality of the final product, as it reduces the risk of dust or other particles adhering to the wet varnish and affecting the aesthetic and functional quality of the container.

In a more preferred embodiment, the removal of excessive varnish is performed immediately after the spraying of the varnish layer. This can further enhance the consistency of the varnish layer and the efficiency of the drying and curing process. In a most preferred embodiment, the removal of excessive varnish is performed using a cloth immersed in a solvent. This can ensure a thorough removal of excessive varnish and also prevent any potential damage to the glass container during the removal process. The solvent can be any chosen from: acetone, isopropyl alcohol, ethyl acetate, mineral spirits, toluene or xylene.

In a preferred embodiment, the method of decorating glass containers with varnish involves the removal of excessive varnish using a cloth that is immersed in acetone. The acetone serves as a solvent that effectively dissolves the surplus varnish, allowing it to be easily wiped away. It is noteworthy that acetone is chosen due to its high volatility and ability to quickly evaporate after use, leaving no undesirable residue on the glass container. The cloth used in this process is preferably a soft, absorbent material that can efficiently wipe away the dissolved varnish without causing any damage to the underlying varnish layer or the glass container itself.

In a more preferred embodiment, the cloth immersed in acetone is used to remove excessive varnish after each layer of varnish is applied. This ensures that each layer is uniformly coated before the next layer is applied, thereby enhancing the overall quality of the varnish decoration. In the most preferred embodiment, the cloth is soaked in acetone for a specific period, preferably between 5 and 10 minutes, more preferably between 7 and 9 minutes, and most preferably for 8 minutes. This soaking period ensures that the cloth is sufficiently saturated with acetone for effective removal of the excessive varnish.

In a preferred embodiment of the invention, a lid is applied to the glass container during the spraying of the varnish. This step in the method ensures that the interior of the glass container remains uncontaminated by the varnish, thereby preserving the purity of the container's content. This technique significantly reduces the necessity for further cleaning processes post-decoration, thereby increasing the efficiency of the overall method and reducing the time and resources required for the production process.

The lid is preferably removed before the thermal treatment.

The varnish as used in the method, can be any varnish as known by the skilled person suitable to decorate glass surfaces. For example:
Acrylic Varnish: Known for its clarity and durability, acrylic varnish can be either water-based or solvent-based. It dries quickly, is water-resistant, and does not yellow over time, making it a popular choice for a variety of decorative applications.
Polyurethane Varnish: This type of varnish provides a hard, durable finish that is resistant to water, chemicals, and abrasion. It's available in various finishes from matte to high gloss.

Alkyd Varnish: Made from alkyd resin, this varnish offers a durable and flexible finish. It's often used where a glossy and hard-wearing surface is desired.

Epoxy Varnish: Known for its excellent adhesion and durability, epoxy varnish provides a tough, waterproof finish.

Two-Part Varnishes: These varnishes consist of a resin and a hardener that are mixed before application. They provide a very durable and chemical-resistant finish, commonly used in environments where the surface is subject to heavy wear.

Spirit Varnish: Made from a solution of resin dissolved in alcohol, spirit varnishes dry quickly to a hard but somewhat brittle finish.

Oil Varnish: This traditional varnish is made by cooking or mixing drying oils with resins. It dries slowly and is known for its rich, warm finish that deepens over time.

The varnish can be chosen from: Acrylic Varnish, Polyurethane Varnish, Alkyd Varnish, Epoxy Varnish, Two-Part Varnish, Spirit Varnish, Shellac and Oil Varnish, preferably Acrylic Varnish or Polyurethane Varnish.

In step (iii) of the method a thermal treatment is carried out. The three-step thermal treatment process has been found to provide optimal results in terms of varnish adhesion, durability, and aesthetic appeal. However, it should be noted that the specific parameters of the thermal treatment process can be adjusted depending on the specific requirements of the production process and the desired characteristics of the decorated glass container.

In step (a) of the thermal treatment, the temperature increase rate is preferably between 70 and 90°C/h, more preferably between 75 and 85°C/h. The end temperature in this heating step is preferably between 90 and 110, more preferably between 95 and 105°C.

In a preferred embodiment of the invention, the initial step of the thermal treatment process, namely step (a), is characterized by a controlled duration that ranges between 0.5 and 1.5 hours, preferably between 0.75 and 1.25 hours.

In step (b) of the thermal treatment, the temperature increase rate is preferably between 145 and 165°C/h, more preferably between 150 and 160°C/h. The end temperature in this heating step is preferably between 140 and 160, more preferably between 145 and 155°C.

In a preferred embodiment of the invention, step (b) of the method, which involves the application of varnish to the glass container, has a duration of between 10 and 30 minutes, preferably between 15 and 25 minutes. This particular time range has been found to be optimal in achieving a uniform and consistent coating of varnish on the glass container. It provides sufficient time for the varnish to spread evenly across the surface of the container, thereby preventing pooling or dripping of the varnish and ensuring a smooth and aesthetically pleasing finish. Furthermore, the specified duration also allows for the efficient use of varnish, minimizing waste and contributing to cost-effectiveness in the production process.

In step (c) of the thermal treatment, the oven is maintained at the end temperature of step (b) for between 1 and 20 minutes, preferably between 5 and 15 minutes.

The process involves heating the glass container at a controlled rate, with the temperature being gradually increased to a predetermined level. The specific parameters of the thermal treatment process, including the rate of temperature increase and the end temperature, may be adjusted based on factors such as the type of varnish used and the size and thickness of the glass container. In a preferred embodiment, the thermal treatment process includes heating at a rate of 80°C/h until 100°C, followed by heating at a rate of 156°C/h until 150°C, with the end temperature being maintained for a period of at least 10 minutes. This controlled thermal treatment process ensures that the varnish is fully cured, resulting in a high-quality, durable finish that enhances the aesthetic appeal of the glass container.

This particular timeframe for heating is not arbitrarily chosen but has been determined to be optimal for achieving the desired results in terms of consistency and quality of the final product. The controlled duration of this heating step significantly contributes to the uniformity of the varnish application on the glass container, ensuring that the varnish is evenly distributed and adheres properly to the surface of the container. This uniformity is an important factor that enhances the aesthetic appeal of the final product, as it eliminates any irregularities or inconsistencies that may detract from the visual quality of the decorated glass container.

Moreover, the controlled duration of this heating step also plays a role in improving the overall production efficiency. By setting a specific timeframe for this process, it is possible to streamline the production schedule and optimize the use of resources. This enhancement in efficiency is not only beneficial in terms of reducing production costs but also in increasing the output, as more glass containers can be decorated within a given period.

In a preferred embodiment of the invention, the thermal treatment process begins at an ambient temperature, preferably within the range of 20 to 25°C, preferably between 20 and 23°C.

The use of ambient temperature as the starting point for the thermal treatment process enhances the efficiency of the method. It eliminates the need for additional energy to preheat the oven, thereby reducing the overall energy consumption of the process. This contributes to the environmental sustainability of the method, aligning it with contemporary standards of eco-friendly operations. Furthermore, by starting at a controlled temperature range, the process can be standardized across different production environments, ensuring consistent quality of the decorated glass containers.

It is to be understood the steps as disclosed herein are performed sequentially.

In a specific embodiment of the invention, the method comprises the steps of:
i. spraying varnish on a glass container,
ii. drying said glass container for at least 4 hours,
iii. transferring said glass container to an oven, wherein said glass container are subjected to a thermal treatment, wherein said thermal treatment comprises the steps of:
   a. heating at a temperature increase rate of between 70 and 90°C/h until a temperature of between 90 and 110°C is reached;
   b. heating at a temperature increase rate of between 145 and 165°C/h, wherein an end temperature is reached, wherein said end temperature lies between 140 and 160°C;
   c. heating for 1-20 minutes at said end temperature;
   d. cooling said glass container by decreasing the temperature in the oven thereby obtaining decorated glass container,
iv. removing said glass container from said oven.

In a specific embodiment of the invention, the method comprises the steps of:
i. spraying multiple layers of varnish on a glass container, wherein said layers are dried before the application of the next layer for at least 30 minutes,
ii. drying said glass container for at least 4 hours,
iii. transferring said glass container to an oven, wherein said glass container are subjected to a thermal treatment, wherein said thermal treatment comprises the steps of:
   a. heating at a temperature increase rate of between 70 and 90°C/h until a temperature of between 90 and 110°C is reached;
   b. heating at a temperature increase rate of between 145 and 165°C/h, wherein an end temperature is reached, wherein said end temperature lies between 140 and 160°C;
   c. heating for 1-20 minutes at said end temperature;
   d. cooling said glass container by decreasing the temperature in the oven thereby obtaining decorated glass container,
iv. removing said glass container from said oven.

In a specific embodiment of the invention, the method comprises the steps of:
i. spraying varnish on a glass container,
ii. drying said glass container for at least 4 hours,
iii. transferring said glass container to an oven, wherein said glass container are subjected to a thermal treatment, wherein said thermal treatment comprises the steps of:
   a. heating for a duration of between 0.5 and 1.5 hours at a temperature increase rate of between 70 and 90°C/h;
   b. heating for a duration of between 10 and 30 minutes at a temperature increase rate of between 145 and 165°C/h, wherein an end temperature is reached;
   c. heating for 1-20 minutes at said end temperature;
   d. cooling said glass container by decreasing the temperature in the oven thereby obtaining decorated glass container,
iv. removing said glass container from said oven.

In a preferred embodiment, the invention pertains further to a glass container decorated with varnish, which is preferably achieved through a method as described in the previous embodiments. This method provides a reliable and consistent technique for decorating glass containers, leading to high-quality end products. The method begins with the application of varnish to the glass container. This process, therefore, significantly enhances the aesthetic value of the glass container, making it more appealing to consumers and more suitable for various applications.

The method involves a carefully calibrated thermal treatment process, which is designed to ensure optimal adhesion of the varnish to the glass container, while also preserving the quality of the varnish. This method ensures a uniform application of varnish, reducing the likelihood of defects and inconsistencies that can compromise the appearance and durability of the varnished glass containers.

The glass container decorated with varnish obtained from this method presents a superior solution to the challenges of durability, aesthetic quality, process efficiency, and environmental impact associated with the decoration of glass containers.

### EXAMPLES AND DESCRIPTION OF FIGURES

### Example 1 relates to a method according to an embodiment of the invention.

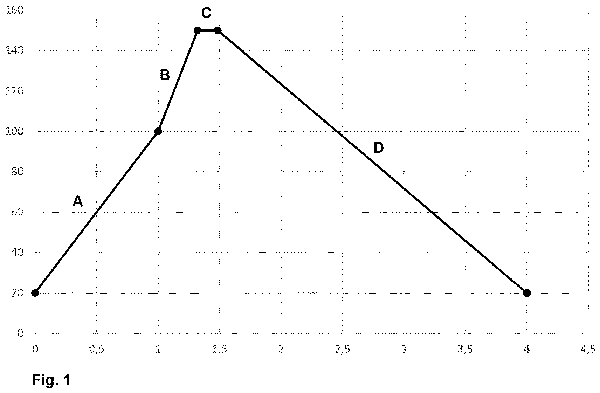

The varnish is applied by spraying with a spray gun while a glass jar rotates (on a rotation device), and a lid is applied to protect the interior. Excessive varnish is removed. It is air dried for at least 30 minutes, before applying a second layer. The jar is left to dry for 6 hours after which a thermal treatment was carried out, from which the temperature profile (temperature (°C)-time (h)) is given in figure 1.

The thermal treatment is performed in three steps, with each step having a specific temperature increase speed and end temperature. The first step (A) involves a temperature increase speed of 80°C/h to reach a preferred temperature of 100°C.

The second step (B) involves a temperature increase speed of 156°C/h to reach a preferred temperature of 150°C. The third step (C) involves maintaining the end temperature for 10 minutes. Afterwards the oven is cooled down (D).

## Claims

1. A method for decorating a glass container with varnish, comprising the sequential steps of:
i. spraying varnish on a glass container,
ii. drying said glass container for at least 4 hours,
iii. transferring said glass container to an oven, wherein said glass container is subjected to a thermal treatment, wherein said thermal treatment comprises the sequential steps of:
a. heating at a temperature increase rate of between 70 and 90°C/h until a temperature of between 90 and 110°C is reached;
b. heating at a temperature increase rate of between 145 and 165°C/h, wherein an end temperature is reached, wherein said end temperature lies between 140 and 160°C;
c. heating for 1-20 minutes at said end temperature;
d. cooling said glass container by decreasing the temperature in the oven thereby obtaining decorated glass container,
iv. removing said glass container from said oven.

2. Method according to claim 1, wherein said varnish is applied in multiple layers, preferably 2 layers.

3. Method according to claim 2, wherein a drying step is carried out between spraying layers.

4. Method according to claim 3, wherein said drying step is carried out for a period of between 1 and 60 minutes, preferably between 20 and 40 minutes.

5. Method according to any of the preceding claims, wherein said glass container is engraved before applying said thermal treatment.

6. Method according to any of the preceding claims, wherein the varnish is applied manually with a spray gun.

7. Method according to any of the preceding claims, wherein excessive varnish is removed after spraying a layer of varnish.

8. Method according to claim 7, wherein the excessive varnish is removed with a cloth immersed in acetone.

9. Method according to any of the preceding claims, wherein a lid is applied to the glass container during spraying of the varnish.

10. Method according to any of the preceding claims, wherein step (a) has a duration of between 0.5 and 1.5 hours.

11. Method according to any of the preceding claims, wherein step (b) has a duration of between 10 and 30 minutes.

12. Method according to any of the preceding claims, wherein the temperature at the beginning of said thermal treatment is ambient temperature, preferably between 20 and 25°C.
